# EUROPEAN PATENT APPLICATION

(11) **EP 1 201 608 A1**
(43) Date of publication of application: **02.05.2002**
(21) Application number: 01902679.8
(22) Date of filing: 31.01.2001
(51) Int. Cl.: C01G 15/00

(54) **HEXAGONAL LAMELLAR COMPOUND BASED ON INDIUM-ZINC OXIDE AND PROCESS FOR PRODUCING THE SAME**

(30) Priority: 04.02.2000 JP 2000027038
(71) Applicant: OTSUKA CHEMICAL COMPANY, LIMITED, Osaka-shi, Osaka 540-0021 (JP)
(72) Inventor: KIKKAWA, Shinichi, Suita-shi, Osaka 565-0851 (JP); OGAWA, Hidetoshi, c/o Otsuka Chemical Co., Ltd., Tokushima 771-01 (JP); HOSOKAWA, Shoji, c/o Otsuka Chemical Co., Ltd., Tokushima-shi, Tokushima 771-01 (JP)
(74) Representative: Merkle, Gebhard
(86) International application number: JP0100630
(87) International publication number: WO0156927

(57) **Abstract**

An indium zinc oxide based hexagonal layered compound characterized as being represented by the general formula (ZnO)ₘ·In₂O₃ (m = 2 - 20) and having a mean thickness of 0.001 - 0.3 µm and a mean aspect ratio (mean major diameter/mean thickness) of 3 - 1,000.

## Description

### TECHNICAL FIELD

The present invention relates to indium zinc oxide-based hexagonal layered compounds. More particularly, the present invention relates to finely-divided, transparent and flaky indium zinc oxide-based hexagonal layered compounds which are applicable for use in antistatic control agents and electroconductive fillers for resins, electroconductive coatings, inks, pastes, transparent electrodes for display devices, and the like.

### BACKGROUND ART

Conventionally, various fillers have been incorporated in resins to improve their mechanical strength. It is particularly known that the aspect ratios of fibrous or flaky compounds (major diameter/diameter in the case of fibrous compounds and a ratio of major diameter/thickness in the case of flaky compounds) are effective, for example, to improve tensile and flexural strength, reduce rates of thermal expansion and heighten warpage-restraining effects and these effects are furthered with higher aspect ratios.

However, the incorporation of the fibrous compounds, because of their specific shape, has led to the increased occurrence of anisotropy in the resin properties, especially in coefficient of thermal expansion. Another problem has been the difficulty for the fibrous compounds to reinforce the torsional strength of the resin sufficiently.

Also, problems have arisen even in the case where the high-aspect ratio, flaky compounds are used. That is, if their thicknesses increase, their reinforcing effect drops and their use lowers surface smoothness and optical properties (e.g., refractive index and transmittance) of the resin.

There accordingly is a need for finely-divided, high-aspect ratio flaky fillers which exhibit superior resin reinforcement performances.

Apart from the above, tin-incorporated indium oxide (ITO), antimony-incorporated tin oxide (ATO) and aluminum-incorporated zinc oxide are known as useful white or pale electroconductive materials. However, because of their particulate form, these materials when loaded in resins must be added in a large amount, which has been a problem.

The compounds either represented by the general formula (ZnO)ₘ·In₂O₃ (m = 3 - 20) or obtained via substitution of other metal element for a part of In or Zn in the formula are known as effective to solve the above-described problems (See, for example, Japanese Patent Laying-Open Nos. Hei 6-236710 and 6-236711).

However, the above-identified references utilize manufacturing methods in which precipitates produced as a result of a coprecipitation process precede. These methods have thus encountered the following deficiencies: they include many steps, such as separation, filtering, drying, calcination and size reduction, which add to complexity; and they require high calcination temperatures which inevitably lead not only to size increase of particles as results of interparticle sintering and crystal growth but also to non-homogeneity of components as a result of evaporation of zinc oxide.

That is, the above-described compounds have not been provided in the form of homogeneous, finely-divided, high-aspect ratio flaky substances up to date.

### DISCLOSURE OF THE INVENTION

It is an object of the present invention to provide an indium zinc oxide based hexagonal layered compound which takes a finely-divided flaky or platy form that does not impair surface smoothness and optical properties (e.g., refractive index, transmittance or the like) and has the superior electrical conductivity and the increased resin reinforcing effect or the like, and which is suitable for use as a filler for resins, a filler for coatings, inks and pastes, especially as an antistatic agent, electrostatic control agent, electroconductive agent, transparent electrode for display devices and the like.

It is another object of the present invention to provide a method for manufacturing a flaky or platy, indium zinc oxide based hexagonal layered compound in an effective manner to reduce energy consumption.

The hexagonal layered compound in accordance with a first aspect of the present invention is an indium zinc oxide based hexagonal layered compound (may hereinafter be referred to as "electroconductive material I") represented by a general formula (ZnO)ₘ·In₂O₃ (m = 2 - 20) and characterized as having a mean thickness of 0.001 - 0.3 µm and a mean aspect ratio (mean major diameter/mean thickness) of 3 - 1,000.

The hexagonal layered compound in accordance with a second aspect of the present invention is an indium zinc oxide based hexagonal layered compound (may hereinafter be referred to as "electroconductive material II") derived via substitution of at least one element selected from the group consisting of Sn, Y, Ho, Pb, Bi, Li, Al, Ga, Sb, Si, Cd, Mg, Co, Ni, Zr, Hf, Sc, Yb, Lu, Fe, Nb, Ta, W, Te, Au, Pt and Ge for a part of In or Zn in the hexagonal layered compound represented by the general formula (ZnO)ₘ·In₂O₃ (m = 2 - 20), and characterized as having a mean thickness of 0.001 - 0.3 µm and a mean aspect ratio (mean major diameter/mean thickness) of 3 - 1,000.

Preferably, the electroconductive materials I and II have a mean thickness of 0.001 - 0.1 µm and a mean aspect ratio of 3 - 1,000.

A method for manufacturing the hexagonal layered compound, in accordance with the present invention, can be utilized to manufacture the electroconductive materials I and II of the present invention. In the manufacture of the electroconductive material I, a mixture is provided which contains a zinc compound, an indium compound, organic acid, and nitric acid if neither of the zinc compound and indium compound is a nitrate compound. In the manufacture of the electroconductive material II, a mixture is provided which contains a zinc compound, an indium compound, a compound containing a substituting element, organic acid, and nitric acid which is optionally added thereto if neither of the zinc compound, indium compound and substituting element containing compound is a nitrate compound. In either case, the mixture is heated and thickned to a viscous liquid. This viscous liquid is successively heated to a temperature of 250 - 350 °C so that a self-combustion reaction is caused to occur. This results in the manufacture of the hexagonal layered compound, i.e., the electroconductive material I or II.

The electroconductive materials I and II of the present invention are hexagonal layered compounds. The hexagonal layered compound, as used throughout this specification, refers to a substance which, when subjected to X-ray diffraction analysis, shows an X-ray diffraction pattern attributed to hexagonal layered compounds.

The electroconductive materials I and II of the present invention take the form of finely divided, high-aspect ratio leaves, i.e., have a mean thickness of 0.001 - 0.3 µm, preferably 0.001 - 0.1 µm, and a mean aspect ratio (mean major diameter/mean thickness) of 3 - 1,000, preferably 3 - 500, more preferably 3 - 100.

In this specification, the mean thickness is an arithmetic mean of values measured via observation by a transmission electron microscope (TEM) for about 20 particles having appreciable thicknesses within its visual field. The major diameter is determined by viewing a particle from its thickness direction, measuring the projected area of the particle by TEM observation using a TEM and calculating a value as a diameter of a circle converted from the measured area. The mean major diameter is an arithmeic mean of such values determined for about 20 particles having appreciable thicknesses within a visual field of the TEM.

The electroconductive materials I and II of the present invention is an aggregation of particles. Due to such a nature, they may incidentally include particles which, if viewed individually, fall outside the range specified in the appended claims. However, the electroconductive materials I and II of the present invention may include such particles unless inclusion thereof adversely affects the purposes of the present application. In specific, the electroconductive material of the present invention is permitted to include such particles if all paticles encompassing such particles have a mean thickness and a mean aspect ratio which fall inside the respective ranges specified in claims.

In the above general formula, m is specified to fall within the range 2 - 20 for the following reasons. That is, it is difficult to assign a value of below 2 for m because with such a value, production of indium oxide is accelerated while production of hexagonal layered compound is retarded. On the other hand, it is not desirable to assign a value of exceeding 20 for m because with such a value, production of zinc oxide is accelerated to reduce electrical conductivity. The compounds of the above general formula with m = 3, 4, 5 or 7 and any mixtures thereof can be manufactured in a relatively easy manner and at high purities.

These compounds are superior in moisture resistance to ITO and ATO, hard to be darkened even by reduction and comparable in electrical conductivity to ITO and ATO. Their fine sizes and high aspect ratios make them applicable for various uses such as electroconductive fillers, particularly suitable for incorporation in thin films, films and the like.

The electroconductive materials I of the present invention can be manufactured, for example, by preparing a mixture (may be partly in the form of a dispersion) of a zinc compound, indium compound, organic acid and optional nitric acid, heating the mixture to the extent that it is concentrated and liquefied (gelled) into a viscous liquid, applying successive heating to cause a self-combustion reaction to occur and, if necessary, applying additional heating. The self-combustion reaction, as used herein, means a reaction involving combustion of carbon moieties in the organic acid by oxygen supplied from a nitrate compound or nitric acid.

In accordance with the manufacturing method of the present invention, the gelled, viscous raw compound is caused to undergo the self-combustion reation, which is a feature particularly unique to the present invention. During the reaction, gases are generated to produce celles in the raw compound so that it is rendered into the form of a thin film. This provides the following effects. (1) The target substance can be produced sufficiently via reaction at a low-temperature range that is apart from a conventional knowledge, for example, at temperatures below 600 °C, even in the 250 - 350 °C temperature range. (2) The target substance can be obtained in the form of ultra-thin leaves.

Any zinc compound and indium compound can be used if they can be formed into oxides when heated. Examples include nitrates, sulfates, halides (chlorides and others), carbonates, organic acid salts (acetates, propionates, naphthenates and others), alkoxides (methoxides, ethoxides and others), organometallic complexes (acetylacetonates and others) and the like of zinc and indium. Among them, the use of nitrates, organic acid salts, alkoxides and metal complexes thereof is preferred since they when decomposed leave little impurities behind. The use of nitrates thereof is particularly preferred for their ability to serve also as exothermic sources during calcination.

Preferably, the aforementioned zinc compound and indium compound are supplied in the form of a solution containing the compound dissolved in an appropriate solvent. The type of the solvent is chosen depending upon the type of the raw material used. Examples of useful solvents include water, alcohols, various aprotic polar solvents and the like. Preferably, solvents are chosen which allow high solubility of individual raw components and permit viscosity build-up (gelation) when exposed to heat. In other words, in the case where the organic acid salt, zinc compound and indium compound are reacted to form a product, solvents are used in which the product shows a high degree of solubility. The preferred solvent example is water.

Preferably, a concentration of a combination of metals in the solution is not less than 0.01 mole/liter. If it is below 0.01 mole/liter, heat thickening requires a longer period to unfavorably reduce productivity.

The amounts of the zinc compound and indium compound incorporated can be suitably chosen depending upon the zinc/indium ratio (i.e., the desired value of m) of the target compound.

During heating, i.e., during temperature elevation, the organic acid serves as a gelling agent to promote thickening and dewatering. During the self-combustion reaction, it serves as a carbon source that participates in the reaction. Here, any organic acid can be used if it decomposes on heating to produce carbons. Preferred organic acids are oxy-acids and amino acids. Particularly preferred are those having high boiling points (e.g., 140 °C and higher).

Specific examples of organic acids include pentadecanoic acid, octadecanoic acid, oleic acid, maleic acid, fumaric acid, adipic acid, sebacic acid, naphthoic acid, glyceric acid, tartaric acid, citric acid, salicylic acid, oxybenzoic acid, gallic acid, monoaminomonocarboxylic acids (glycine, alanine, valine, leucine, isoleucine), oxyamino acids (serine, threonine), sulfur-containing amino acids (cysteine, cystine, methionine), monoaminodicarboxylic acids (glutamic acid, aspartic acid), diaminomonocarboxylic acids (lysine, arginine), amino acids having an aromatic nucleus (phenylalanine, tyrosine), amino acids having a heterocycle (histidine, tryptophan, proline, oxyproline), aliphatic amino acids (β-alanine, γ-aminobutyric acid), aromatic amino acids (anthranilic acid, m-aminobenzoic acid, p-aminobenzoic acid) and the like. Particularly preferred are citric acid (boiling point of about 150 °C), glycine (boiling point of about 200 °C) and glutamic acid (boiling point of about 200 °C).

In the case where the zinc compound and indium compound are not in the nitrate form, it is preferred to further add nitric acid.

The mixture, in the form of a solution containing the aforementioned zinc compound, indium compound, organic acid and optional nitric acid, is introduced in a heat-resistant pot such as a crucible and subsequently heated in a furnace. Heating is generally performed at a temperature of 250 °C - 600 °C, preferably 250 - 400 °C, most preferably 250 - 350 °C, for a period of 0.1 - 100 hours. Heating time and temperature are chosen which allow sufficient thickening of the solvent, sufficient elevation of the system temperature, decomposition of the organic acid and progress of the self-combustion reaction between carbons formed via decomposition of the organic acid and the nitric acid. In the present invention, the self-combustion reaction is generally observed as rapid foaming of the gelled solution. Heating may be discontinued at the point when the self-combustion reaction is observed, or alternatively, continued at a temperature of 250 °C - 600 °C, preferably 250 - 400 °C, most preferably 250 - 350 °C, for a period of about 0.1 - 10 hours for the purposes including decomposition of impurities and reduction of the hexagonal layered compound.

Prior to being heated in a furnace, the solution may be gelled by causing it to undergo a dewatering and thickening reaction at a temperature of not lower than 100 °C. In this instance, it is desired that the solution is transferred in the furnace at the point when it is formed into a gel and subjected to successive heating.

The self-combustion reaction can be caused to proceed at any atmosphere. Accordingly, heating may be performed under any atmosphere, such as a reducing gas, inert gas, ambient, vacuum or other atmosphere. Preferably, heating is carried out under a reducing gas, inert gas or vacuum atmosphere, since these conduce reduction of the hexagonal layered compound produced.

As similar to the electroconductive material I, the electroconductive material II of the present invention take the form of finely divided leaves. The electroconductive material II differs from the electroconductive material I in the respect that a part of In or Zn in the hexagonal layered compound represented by the general formula (ZnO)ₘ·In₂O₃ (m = 2 - 20) is replaced by at least one element selected from the group consisting of Sn, Y, Ho, Pb, Bi, Li, Al, Ga, Sb, Si, Cd, Mg, Co, Ni, Zr, Hf, Sc, Yb, Lu, Fe, Nb, Ta, W, Te, Au, Pt and Ge.

In the electroconductive material II, 40 at.% (atomic %) or less, preferably 20 at.% or less, of In or Zn is substituted by such an element, based on a total number of In and Zn atoms. If the part substituted exceeds 40 at.%, there is a possibility that production of the hexagonal layered compound may be unfavorably hindered.

In general, the element which substitutes at an atomic site of Zn is an element having a valence number of 2, such as Cd, Mg, Co, Ni, or Fe (divalent Fe). The element having a valence number of 3 or greater substitutes preferentially at an atomic site of In.

In the manufacture of the electroconductive material II, a raw material can be prepared, for example, by adding a metal compound (compound of a substituting element) of at least one selected from the group consisting of Sn, Y, Ho, Pb, Bi, Li, Al, Ga, Sb, Si, Cd, Mg, Co, Ni, Zr, Hf, Sc, Yb, Lu, Fe, Nb, Ta, W, Te, Au, Pt and Ge, preferably at least one selected from the group consisting of Y, Ho, Sn, Pb, Bi, Li, Al, Ga, Sb, Si and Ge, to the zinc compound and indium compound used as a raw material in the manufacture of the electroconductive material I. Here, any metal compound which can be formed into an oxide when heated is useful for addition to the zinc compound and indium compound. Examples of metal compounds include nitrates, sulfates, halides (chlorides and others), carbonates, organic acid salts (acetates, propionates, naphthenates and others), alkoxides (methoxides, ethoxides and others), organometallic complexes (acetylacetonates and others) and the like. Among them, the use of nitrates is preferred.

Otherwise, the conditions employed in the manufacture of the electroconductive material I are followed.

When necessary, the electroconductive materials I and II may be milled to major diameters of 1 µm and smaller, preferably 0.5 µm and smaller, by means of a ball mill, roller mill, jet mill, pearl mill or the like. They are increased in specific surface area by size reduction. The subsequent reducing burning further increases the powder resistance values and accordingly improves the electrical conductivity of the material.

Preferably, a reducing treatment is performed under a reducing gas (hydrogen gas, ammonia gas or the like), inert gas (argon gas, neon gas, helium gas, nitrogen gas or the like), vacuum or other atmosphere at 100 - 600 °C for a period of 1 minute - 100 hours. If the reducing treatment is performed at a lower temperature for a shorter period, reduction becomes insufficient. On the other hand, if it is performed at a higher temperature for a longer period, there is an increasing occurrence of aggregation of particles or entrainment of components. Accordingly, neither case is desired.

The hexagonal layered compound of the present invention is particularly suitable for use as a transparent electroconductive material. The electroconductive materials I and II of the present invention have the following advantages: they have superior moisture resistance; and they undergo little change in electrical resistance even when exposed to moisture. Also, they are hardly darkened by the reducing treatment to maintain their transparency. Accordingly, when they are used as a filler for resins, they offer a wide freedom of coloring. This is another advantage. A further advantage is found in the case where they are used as a filler for a resin. Even at low loading, the electrical conductivity of the resin is made quite high. Even at high loading, the transparency of the resin is not affected adversely.

The resin in which the electroconductive materials I and II of the present invention can be incorporated is not particularly specified in type. Examples of resins include thermoplastic resins such as polyethylene, polypropylene, polystyrene, vinyl chloride, vinyl acetate, polyvinyl alcohol, vinylidene chloride, ABS resin, polyester, methyl methacrylate, polyurethane, polyamide, polyacetal, polycarbonate, silicone resin and fluoro resin; and thermosetting resins such as a phenol resin, urea resin, melamine resin, xylene resin, furan resin, alkyd resin, epoxy resin, polyimide resin, silicone resin, fluoro resin, urethane resin, polyester resin and the like.

The electroconductive materials I and II may be loaded in the resin in the amount of 1 - 3,000 parts by weight, based on 100 parts by weight of the resin. At low loading, the electrical conductivity may become insufficient. At high loading, the physical properties of the resin may be adversely affected. Prior to loading, the electroconductive materials I and II may be subjected to surface treatment with an agent (e.g., a silane, titanate, aluminate or other coupling agent) to improve their dispersion properties.

The electroconductive materials I and II can be mixed with the resin by various techniques. A two or three roll mill, or an injection molding machine may be utilized to incorporate the material in the resin either in a hot condition or at room temperature. A conventional technique can also be used which effects mixing of a powder and a solution containing a resin dissolved therein.

The transparent electroconductive composition of the present invention contains the indium zinc oxide based hexagonal layered compound of the present invention and a transparent binder. The use of the indium zinc oxide based hexagonal layered compound of the present invention improves the electrical conductivity while maintaining the high level of transparency, even in the high loading range where the indium zinc oxide based hexagonal layered compound of the present invention accounts for 95 or higher % of the total weight of the transparent electroconductive composition of the present invention.

Examples of transparent binders include transparent synthetic resins, ceramic precursor sol liquids which crystalize when exposed to a UV radiation, and the like.

Useful for the transparent synthetic resin are those resins known in the art as having transparency. In the case where the transparent electroconductive composition of the present invention is applied in either form of a coating compound and a processable compound, examples of suitable transparent synthetic resins include polystyrene, polycarbonate, an acrylic resin, polyvinyl chloride, ABS, AS, PET, PE, a polyester resin, PES, PEI, PBT, PPS, PFA, TPX, cyclopolyolefin, polymethylpentene, a norbornene resin, unsaturated polyester, polyolefin, a polysulfone resin, polyimide and the like.

Useful transparent binders in the case where the transparent electroconductive composition of the present invention is applied in the sole form of a coating compound include synthetic resins such as phenol, alkyd, aminoalkyd, guanamine, epoxy, urethane, fluoro and silicone resins and polyvinyl alcohol; synthetic resin emulsions such as vinyl acetate, styrene-butadiene and acrylic emulsions; water-soluble resins such as water-soluble alkyd, epoxy and polybutadiene resins; ceramic precursor sol liquids which crystalize when exposed to a UV radiation; and the like.

The transparent synthetic resin of the present invention also encompasses a UV-curable resin.

The above-listed transparent binders may be used alone or in combination, if needed.

The amount of the indium zinc oxide based hexagonal layered compound loaded in the transparent electroconductive composition of the present invention is not particularly specified and may suitably be chosen from a wide range depending upon the end purpose and the like of the resulting composition. The indium zinc oxide based hexagonal layered compound is generally loaded in the amount of approximate range of 1 - 3,000 parts by weight, preferably 1 - 600 parts by weight, more preferably 30 - 100 parts by weight, based on 100 parts by weight of the transparent binder. When the electrically conducting performance and transparency of the composition, and its adhesion to a substance when it is formed into a film or a coating film are taken into account, its amount is generally preferred to fall within the approximate range of 30 - 100 parts by weight, based on 100 parts by weight of the transparent binder.

The transparent electroconductive composition of the present invention may further contain one or more of various known dispersing agents including anionic, nonionic and cationic dispersing agents. The inclusion of the dispersing agent is preferred particularly when the transparent electroconductive composition of the present invention is formulated into a coating composition.

The transparent electroconductive composition of the present invention may further contain a viscosity control agent, an antifoaming agent, a leveling agent, or other known additive for resins, within the range that does not adversely affect transparency and electrical conductivity of the composition.

### BEST MODE FOR CARRYING OUT THE INVENTION

The present invention is now described in more detail with reference to the following examples.

The following procedures were utilized to determine various features.

The crystal structure and chemical formula were determined from an X-ray diffraction chart and fluorescent X-ray analysis.

The mean thickness was defined as an arithmetic mean of values determined via observation by a TEM for about 20 (upright) particles having appreciable thickness within its visual field.

The major diameter was determined by viewing a particle from its thickness direction, measuring the projected area of the particle by TEM observation and calculating a value as a diameter of a circle reduced from the measured area. The mean major diameter was defined as an arithmetic mean of values determined for about 20 particles having appreciable thicknesses within a visual field of the TEM.

The mean aspect ratio was determined by dividing the mean major diameter by the mean thickness and rounding the quotient to a first position, so that the mean aspect ratio was given by an integral number.

The powder resistance was determined by packing an objective powder in a 10 mm diameter insulating container, pressing the powder between upper and lower electrodes, each in the form of a copper push bar, to a pressure of 100 kg/cm², measuring an electrical resistance between the electrodes and calculating a value from the measured electrical resistance, an area of the electrode and a distance between the electrodes.

### EXAMPLE 1

### (Manufacture of hexagonal layered compound represented by the general formula (ZnO)ₘ·In₂O₃ (m = 3, m = 4))

2.70 g of zinc nitrate hexahydrate, 2.16 g of indium nitrate trihydrate and 0.98 g of citric anhydride were dissolved in 20 ml deionized water.

The resulting solution was introduced in an alumina crucible and heated at 300 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed that the powder was a homogeneous hexagonal layered compound represented by the general formula (ZnO)ₘ·In₂O₃ (blend of m = 3 and m = 4 in the ratio of about 1:1) and present in the form of platy crystals having a mean thickness of 0.05 µm and a mean aspect ratio of 10.

The resistance of this powder was found to be 6 Ω·cm. After subjected to a 1,000-hour moisture resistance test under the conditions of 60 °C and 90 %RH, the powder showed the resistance of 8 Ω·cm. This demonstrated the suprior moisture resistance of the powder.

### EXAMPLE 2

### (Manufacture of hexagonal layered compound represented by the general formula (ZnO)ₘ·In₂O₃ (m = 4))

3.57 g of zinc nitrate hexahydrate, 2.13 g of indium nitrate trihydrate and 0.98 g of citric anhydride were dissolved in 10 ml deionized water.

The resulting solution was introduced in an alumina crucible and heated at 300 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed the powder as a single and homogeneous hexagonal layered compound represented by the general formula (ZnO)ₘ·In₂O₃ (m = 4) and present in the form of platy crystals having a mean thickness of 0.04 µm and a mean aspect ratio of 12.

The resistance of this powder was found to be 14 Ω·cm. After subjected to a 1,000-hour moisture resistance test under the conditions of 60 °C and 90 %RH, the powder showed the resistance of 18 Ω·cm. This demonstrated the suprior moisture resistance of the powder.

### EXAMPLE 3

### (Manufacture of hexagonal layered compound represented by the general formula (ZnO)ₘ·In₂O₃ (m = 5))

4.47 g of zinc nitrate hexahydrate, 2.13 g of indium nitrate trihydrate and 0.98 g of citric anhydride were dissolved in 10 ml deionized water.

The resulting solution was introduced in an alumina crucible and heated at 300 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed the powder as a single and homogeneous hexagonal layered compound represented by the general formula (ZnO)ₘ·In₂O₃ (m = 5) and present in the form of platy crystals having a mean thickness of 0.05 µm and a mean aspect ratio of 15.

The resistance of this powder was found to be 20 Ω·cm. After subjected to a 1,000-hour moisture resistance test under the conditions of 60 °C and 90 %RH, the powder showed the resistance of 20 Ω·cm. This demonstrated the suprior moisture resistance of the powder.

### EXAMPLE 4

### (Manufacture of hexagonal layered compound represented by the general formula (ZnO)ₘ·In₂O₃ (m = 7))

4.16 g of zinc nitrate hexahydrate, 1.44 g of indium nitrate trihydrate and 0.98 g of citric anhydride were dissolved in 10 ml deionized water.

The resulting solution was introduced in an alumina crucible and heated at 300 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed the powder as a single and homogeneous hexagonal layered compound represented by the general formula (ZnO)ₘ·In₂O₃ (m = 7) and present in the form of platy crystals having a mean thickness of 0.03 µm and a mean aspect ratio of 20.

The resistance of this powder was found to be 40 Ω·cm. After subjected to a 1,000-hour moisture resistance test under the conditions of 60 °C and 90 %RH, the powder showed the resistance of 40 Ω·cm. This demonstrated the suprior moisture resistance of the powder.

### EXAMPLE 5

### (Manufacture of hexagonal layered compound represented by the general formula (ZnO)ₘ·In₂O₃ (m = 3, m = 4))

0.73 g of zinc oxide, 2.16 g of indium nitrate trihydrate and 0.98 g of citric anhydride were dissolved in 10 ml deionized water.

The resulting solution was introduced in an alumina crucible and heated at 400 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed that the powder was a homogeneous hexagonal layered compound represented by the general formula (ZnO)ₘ·In₂O₃ (blend of m = 3 and m = 4 in the ratio of about 1:1)) and present in the form of platy crystals having a mean thickness of 0.07 µm and a mean aspect ratio of 10.

The resistance of this powder was found to be 10 Ω·cm. After subjected to a 1,000-hour moisture resistance test under the conditions of 60 °C and 90 %RH, the powder showed the resistance of 12 Ω·cm. This demonstrated the suprior moisture resistance of the powder.

### EXAMPLE 6

### (Manufacture of hexagonal layered compound represented by the general formula (ZnO)ₘ·In₂O₃ (m = 3, m = 4) with substitution of Sn for a part of In)

2.70 g of zinc nitrate hexahydrate, 1.83 g of indium nitrate trihydrate, 0.19 g of stannous oxide and 0.98 g of citric anhydride were dissolved in 20 ml deionized water.

The resulting solution was introduced in an alumina crucible and heated at 300 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed that the powder was a homogeneous hexagonal layered compound represented by the general formula (ZnO)ₘ·In₂O₃ (blend of m = 3 and m = 4 in the ratio of about 1:1)), with about 15 at % of In at its atomic sites being replaced by Sn, and present in the form of platy crystals having a mean thickness of 0.06 µm and a mean aspect ratio of 12.

The resistance of this powder was found to be 1 Ω·cm. After subjected to a 1,000-hour moisture resistance test under the conditions of 60 °C and 90 %RH, the powder showed the resistance of 2 Ω·cm. This demonstrated the suprior moisture resistance of the powder.

### EXAMPLE 7

### (Manufacture of hexagonal layered compound represented by the general formula (ZnO)ₘ·In₂O₃ (m = 3, m = 4) with substitution of Sn for a part of In)

2.70 g of zinc nitrate hexahydrate, 1.83 g of indium nitrate trihydrate, 0.14 g of stannic oxide and 0.98 g of citric anhydride were dissolved in 20 ml deionized water.

The resulting solution was introduced in an alumina crucible and heated at 300 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed that the powder was a homogeneous hexagonal layered compound represented by the general formula (ZnO)ₘ·In₂O₃ (blend of m = 3 and m = 4 in the ratio of about 1:1)), with about 15 at % of In at its atomic sites being replaced by Sn, and present in the form of platy crystals having a mean thickness of 0.09 µm and a mean aspect ratio of 15.

The resistance of this powder was found to be 0.9 Ω·cm. After subjected to a 1,000-hour moisture resistance test under the conditions of 60 °C and 90 %RH, the powder showed the resistance of 1.2 Ω·cm. This demonstrated the suprior moisture resistance of the powder.

### EXAMPLE 8

### (Manufacture of hexagonal layered compound represented by the general formula (ZnO)ₘ·In₂O₃ (m = 3, m = 4) with substitution of Sn for a part of In)

2.70 g of zinc nitrate hexahydrate, 1.83 g of indium nitrate trihydrate, 0.21 g of stannous acetate and 0.98 g of citric anhydride were dissolved in 20 ml deionized water.

The resulting solution was introduced in an alumina crucible and heated at 300 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed that the powder was a homogeneous hexagonal layered compound represented by the general formula (ZnO)ₘ·In₂O₃ (blend of m = 3 and m = 4 in the ratio of about 1:1)), with about 15 at % of In at its atomic sites being replaced by Sn, and present in the form of platy crystals having a mean thickness of 0.04 µm and a mean aspect ratio of 18.

The resistance of this powder was found to be 1 Ω·cm. After subjected to a 1,000-hour moisture resistance test under the conditions of 60 °C and 90 %RH, the powder showed the resistance of 1.2 Ω·cm. This demonstrated the suprior moisture resistance of the powder.

### EXAMPLE 9

### (Manufacture of hexagonal layered compound represented by the general formula (ZnO)ₘ·In₂O₃ (m = 3, m = 4) with substitution of Sn for a part of In)

2.70 g of zinc nitrate hexahydrate, 1.83 g of indium nitrate trihydrate, 0.19 g of stannous oxalate and 0.98 g of citric anhydride were dissolved in 20 ml deionized water.

The resulting solution was introduced in an alumina crucible and heated at 300 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed that the powder was a homogeneous hexagonal layered compound represented by the general formula (ZnO)ₘ·In₂O₃ (blend of m = 3 and m = 4 in the ratio of about 1:1)), with about 15 at % of In at its atomic sites being replaced by Sn, and present in the form of platy crystals having a mean thickness of 0.11 µm and a mean aspect ratio of 9.

The resistance of this powder was found to be 0.5 Ω·cm. After subjected to a 1,000-hour moisture resistance test under the conditions of 60 °C and 90 %RH, the powder showed the resistance of 0.6 Ω·cm. This demonstrated the suprior moisture resistance of the powder.

### EXAMPLE 10

### (Manufacture of hexagonal layered compound represented by the general formula (ZnO)ₘ·In₂O₃ (m = 3, m = 4) with substitution of Sn for a part of In)

2.70 g of zinc nitrate hexahydrate, 1.83 g of indium nitrate trihydrate, 0.16 g of metastannate and 0.98 g of citric anhydride were dissolved in 20 ml deionized water.

The resulting solution was introduced in an alumina crucible and heated at 300 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed that the powder was a homogeneous hexagonal layered compound represented by the general formula (ZnO)ₘ·In₂O₃ (blend of m = 3 and m = 4 in the ratio of about 1:1)), with about 15 at % of In at its atomic sites being replaced by Sn, and present in the form of platy crystals having a mean thickness of 0.08 µm and a mean aspect ratio of 20.

The resistance of this powder was found to be 1.5 Ω·cm. After subjected to a 1,000-hour moisture resistance test under the conditions of 60 °C and 90 %RH, the powder showed the resistance of 1.6 Ω·cm. This demonstrated the suprior moisture resistance of the powder.

### EXAMPLE 11

### (Manufacture of hexagonal layered compound represented by the general formula (ZnO)ₘ·In₂O₃ (m = 3, m = 4) with substitution of Sn for a part of In)

2.70 g of zinc nitrate hexahydrate, 1.83 g of indium nitrate trihydrate, 0.21 g of stannous chloride dihydrate and 0.98 g of citric anhydride were dissolved in 20 ml deionized water.

The resulting solution was introduced in an alumina crucible and heated at 550 °C in an atmospheric environment. The solution showed gradual boil-down, gelation and then rapid expansion after the lapse of about 15 minutes from the start of heating. The heating was further continued for an additional period of 2 hours. As a result, a pale blue powder was obtained.

Measurement results revealed that the powder was a homogeneous hexagonal layered compound represented by the general formula (ZnO)ₘ·In₂O₃ (blend of m = 3 and m = 4 in the ratio of about 1:1)), with about 15 at % of In at its atomic sites being replaced by Sn, and present in the form of platy crystals having a mean thickness of 0.1 µm and a mean aspect ratio of 8.

The resistance of this powder was found to be 9 Ω·cm. After subjected to a 1,000-hour moisture resistance test under the conditions of 60 °C and 90 %RH, the powder showed the resistance of 10 Ω·cm. This demonstrated the suprior moisture resistance of the powder.

### EXAMPLE 12

### (Manufacture of hexagonal layered compound represented by the general formula (ZnO)ₘ·In₂O₃ (m = 3))

2.70 g of zinc nitrate hexahydrate, 2.16 g of indium nitrate trihydrate and 0.80 g of glutamic acid were dissolved in 20 ml deionized water.

The resulting solution was introduced in an alumina crucible and heated at 280 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed the powder as a single and homogeneous hexagonal layered compound represented by the general formula (ZnO)ₘ·In₂O₃ (m = 3) and present in the form of platy crystals having a mean thickness of 0.03 µm and a mean aspect ratio of 27.

The resistance of this powder was found to be 8 Ω·cm. After subjected to a 1,000-hour moisture resistance test under the conditions of 60 °C and 90 %RH, the powder showed the resistance of 9 Ω·cm. This demonstrated the suprior moisture resistance of the powder.

### EXAMPLE 13

### (Manufacture of hexagonal layered compound represented by the general formula (ZnO)ₘ·In₂O₃ (m = 3))

2.70 g of zinc nitrate hexahydrate, 2.16 g of indium nitrate trihydrate and 0.98 g of citric acid were dissolved in 100 ml ethanol.

The resulting solution was introduced in an alumina crucible and heated at 350 °C under nitrogen atmosphere. The solution showed gradual boil-down as ethanol evaporated, gelation and then rapid expansion after the lapse of about 15 minutes from the start of heating. The heating was further continued for an additional period of 2 hours. As a result, a pale blue powder was obtained.

Measurement results revealed the powder as a single and homogeneous hexagonal layered compound represented by the general formula (ZnO)ₘ·In₂O₃ (m = 3) and present in the form of platy crystals having a mean thickness of 0.03 µm and a mean aspect ratio of 30.

The resistance of this powder was found to be 11 Ω·cm. After subjected to a 1,000-hour moisture resistance test under the conditions of 60 °C and 90 %RH, the powder showed the resistance of 12 Ω·cm. This demonstrated the suprior moisture resistance of the powder.

### EXAMPLE 14

### (Manufacture of hexagonal layered compound represented by the general formula (ZnO)ₘ·In₂O₃ (m = 3))

2.70 g of zinc nitrate hexahydrate, 2.53 g of indium tris(acetylacetonate) and 0.98 g of citric acid were dissolved in 20 ml deionized water. 3.00 g of nitric acid (67.5 weight %) was further added.

The resulting solution was introduced in an alumina crucible and heated at 300 °C under vacuum atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed the powder as a single and homogeneous hexagonal layered compound represented by the general formula (ZnO)ₘ·In₂O₃ (m = 3) and present in the form of platy crystals having a mean thickness of 0.01 µm and a mean aspect ratio of 20.

The resistance of this powder was found to be 9 Ω·cm. After subjected to a 1,000-hour moisture resistance test under the conditions of 60 °C and 90 %RH, the powder showed the resistance of 9.8 Ω·cm. This demonstrated the suprior moisture resistance of the powder.

### EXAMPLE 15

### (Manufacture of hexagonal layered compound represented by the general formula (ZnO)ₘ·In₂O₃ (m = 3, m = 4) with substitution of Mg for a part of Zn)

2.65 g of zinc nitrate hexahydrate, 2.16 g of indium nitrate trihydrate, 0.05 g of magnesium nitrate hexahydrate and 0.88 g of citric anhydride were dissolved in 20 ml deionized water.

The resulting solution was introduced in an alumina crucible and heated at 300 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed that the powder was a homogeneous hexagonal layered compound represented by the general formula (ZnO)ₘ·In₂O₃ (blend of m = 3 and m = 4 in the ratio of about 1:1)), with about 2 at % of Zn at its atomic sites being replaced by Mg, and present in the form of platy crystals having a mean thickness of 0.08 µm and a mean aspect ratio of 30.

The resistance of this powder was found to be 7 Ω·cm. After subjected to a 1,000-hour moisture resistance test under the conditions of 60 °C and 90 %RH, the powder showed the resistance of 8 Ω·cm. This demonstrated the suprior moisture resistance of the powder.

### EXAMPLE 16

### (Manufacture of hexagonal layered compound represented by the general formula (ZnO)ₘ·In₂O₃ (m = 3, m = 4) with substitution of Bi for a part of In)

2.70 g of zinc nitrate hexahydrate, 2.11 g of indium nitrate trihydrate, 0.06 g of bismuth nitrate pentahydrate and 0.98 g of citric anhydride were dissolved in 20 ml deionized water.

The resulting solution was introduced in an alumina crucible and heated at 350 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed that the powder was a homogeneous hexagonal layered compound represented by the general formula (ZnO)ₘ·In₂O₃ (blend of m = 3 and m = 4 in the ratio of about 1:1)), with about 2 at % of In at its atomic sites being replaced by Bi, and present in the form of platy crystals having a mean thickness of 0.09 µm and a mean aspect ratio of 20.

The resistance of this powder was found to be 6 Ω·cm. After subjected to a 1,000-hour moisture resistance test under the conditions of 60 °C and 90 %RH, the powder showed the resistance of 7 Ω·cm. This demonstrated the suprior moisture resistance of the powder.

### EXAMPLE 17

### (Manufacture of hexagonal layered compound represented by the general formula (ZnO)ₘ·In₂O₃ (m = 3, m = 4) with substitution of Y for a part of In)

2.70 g of zinc nitrate hexahydrate, 2.11 g of indium nitrate trihydrate, 0.05 g of yttrium nitrate hexahydrate and 0.98 g of citric anhydride were dissolved in 20 ml deionized water.

The resulting solution was introduced in an alumina crucible and heated at 300 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed that the powder was a homogeneous hexagonal layered compound represented by the general formula (ZnO)ₘ·In₂O₃ (blend of m = 3 and m = 4 in the ratio of about 9:1)), with about 2 at % of In at its atomic sites being replaced by Y, and present in the form of platy crystals having a mean thickness of 0.08 µm and a mean aspect ratio of 25.

The resistance of this powder was found to be 7 Ω·cm. After subjected to a 1,000-hour moisture resistance test under the conditions of 60 °C and 90 %RH, the powder showed the resistance of 7 Ω·cm. This demonstrated the suprior moisture resistance of the powder.

### EXAMPLE 18

### (Manufacture of hexagonal layered compound represented by the general formula (ZnO)ₘ·In₂O₃ (m = 3, m = 4) with substitution of Ho for a part of In)

2.70 g of zinc nitrate hexahydrate, 2.11 g of indium nitrate trihydrate, 0.05 g of holmium nitrate pentahydrate and 0.88 g of citric anhydride were dissolved in 20 ml deionized water.

The resulting solution was introduced in an alumina crucible and heated at 350 °C under nitrogen atmosphere. The solution showed gradual boil-down, gelation and then rapid expansion after the lapse of about 15 minutes from the start of heating. The heating was further continued for an additional period of 2 hours. As a result, a pale blue powder was obtained.

Measurement results revealed that the powder was a homogeneous hexagonal layered compound represented by the general formula (ZnO)ₘ·In₂O₃ (blend of m = 3 and m = 4 in the ratio of about 8:2)), with about 2 at % of In at its atomic sites being replaced by Ho, and present in the form of platy crystals having a mean thickness of 0.07 µm and a mean aspect ratio of 23.

The resistance of this powder was found to be 8 Ω·cm. After subjected to a 1,000-hour moisture resistance test under the conditions of 60 °C and 90 %RH, the powder showed the resistance of 8 Ω·cm. This demonstrated the suprior moisture resistance of the powder.

### EXAMPLE 19

### (Manufacture of reduced hexagonal layered compound represented by the general formula (ZnO)ₘ·In₂O₃ (m = 3))

9 g of the powder obtained in the same manner as in Example 1, 40 g of ethanol solution and 0.5 mm diameter zirconia balls were encapsulated in a polyethylene pot with a volume of 100 ml and pulvarized by 24-hour rotaion of a ball mill. Thereafter, the ethanol solution was removed via separation and drying. As a result, platy crystals were obtained having a thickness of 0.05 µm and a mean aspect ratio of 7.

These were introduced in an alumina boat and then heated at 500 °C under argon-10 % hydrogen atmosphere for one hour.

Analysis revealed that the powder was a hexagonal layered compound still represented by the general formula (ZnO)ₘ·In₂O₃ (m = 3). However, measurement revealed that this powder achieved a marked improvement in resistance, i.e., showed the resistance of 0.8 Ω·cm. After subjected to a 1,000-hour moisture resistance test under the conditions of 60 °C and 90 %RH, the powder showed the resistance of 1.0 Ω·cm, demonstrating the suprior moisture resistance thereof.

### EXAMPLE 20

### (Manufacture of reduced hexagonal layered compound represented by the general formula (ZnO)ₘ·In₂O₃ (m = 3, m = 4) with substitution of Sn for a part of In)

9 g of the powder obtained in the same manner as in Example 6, 40 g of ethanol solution and 0.5 mm diameter zirconia balls were encapsulated in a polyethylene pot with a volume of 100 ml and pulvarized by 24-hour rotaion of a ball mill. Thereafter, the ethanol solution was removed via separation and drying. As a result, platy crystals were obtained having a thickness of 0.06 µm and a mean aspect ratio of 9.

These were introduced in an alumina boat and then heated at 500 °C under argon-10 % hydrogen atmosphere for one hour.

Analysis revealed that the resulting powder was a hexagonal layered compound still represented by the general formula (ZnO)ₘ·In₂O₃ (m = 3). However, measurement revealed that this powder achieved a marked improvement in powder resistance, i.e., showed the resistance of 0.2 Ω·cm. After subjected to a 1,000-hour moisture resistance test under the conditions of 60 °C and 90 %RH, the powder showed the resistance of 0.4 Ω·cm, demonstrating the suprior moisture resistance thereof.

Examples of transparent electroconductive resin compositions containing the electroconductive materials I and II are below described.

Hiresta IP (10⁴ Ω/□ and over) and Loresta AP (below 10⁴ Ω/□ and over), both manufactured by Mitusbishi Petro. Chem. Co., Ltd., were utilized to determine a value for surface resistance.

A turbidimeter NDH-2000, manufactured by Nippon Denshoku Ind. Co., Ltd., was utilized to determine values for tatal light transmittance and haze (turbidity).

### EXAMPLE 21

5 g of the hexagonal layered compound obtained in Example 19 and 0.1 g of a dispersing agent were dispersed in 95 g methyl cellosolve, followed by ultrasonic diffusing. Thereafter, centrifucal sedimentation was effected and a supernatant was dispensed. The dispensed supernatant was thermally thickened by a rotary evaporator to prepare a dispersion with a 10 wt.% filler concentration.

This dispersion was loaded in a solvent-containing liquid acrylic resin so that the filler content reached 70 % by weight of total solids. After thourough mixing, the mixture was coated on a PET film using a bar coater, dried and cured by heat to provide a coating film with a dry thickness of 2 µm.

This coating film exhibited a surface resistance of 5 x 10⁷ Ω/□, a total light transmittance of 90 % and a haze value of 2 %.

### EXAMPLE 22

The procedure of Example 21 was followed, except that the hexagonal layered compound of Example 20 was used in the place of the hexagonal layered compound of Example 19, to obtain a tranparent electroconductive coating film deriving from the composition of the this invention. Its dry film thickness was 2 µm. This coating film exhibited a surface resistance of 3 x 10⁶ Ω/□, a total light transmittance of 90 % and a haze value of 2 %.

### EXAMPLE 23

A dispersion with a 10 wt.% filler concentration was prepared in the same manner as in Example 21. This dispersion was loaded in a solvent-containing liquid acrylic resin so that the filler content reached 90 % by weight of total solids. After thourough mixing, the mixture was coated on a PET film using a bar coater, dried and cured by heat to provide a coating film with a dry thickness of 2 µm.

This coating film exhibited a surface resistance of 2 x 10³ Ω/□, a total light transmittance of 89 % and a haze value of 2 %.

### EXAMPLE 24

The procedure of Example 21 was followed, except that the hexagonal layered compound of Example 20 was used in the place of the hexagonal layered compound of Example 19, to obtain a tranparent electroconductive coating film deriving from the composition of the this invention. Its dry film thickness was 2 µm. This coating film exhibited a surface resistance of 3 x 10¹ Ω/□, a total light transmittance of 88 % and a haze value of 2 %.

### COMPARATIVE EXAMPLE 1

5 g of ITO powder derived via subsitution of tin for a part of In in indium oxide (product designation: F-ITO, manufactured by Dowa Kogyo Co., Ltd.) and 0.1 g of a dispersing agent were dispersed in 95 g methyl cellosolve. The resultant, together with 0.5 mm diameter zirconia balls, were encapsulated in a polyethylene pot with a volume of 100 ml and subjected to pulvarization by 24-hour rotaion of a ball mill. The centrifucal sedimentation followed and a supernatant was dispensed. The dispensed supernatant was thermally thickened by a rotary evaporator to prepare a dispersion with a 10 wt.% filler concentration.

This dispersion was loaded in a solvent-containing liquid acrylic resin so that the filler content reached 80 % by weight of total solids. After thourough mixing, the mixture was coated on a PET film using a bar coater, dried and cured by heat to provide a coating film with a dry thickness of 2 µm.

This coating film exhibited a surface resistance of over 10¹⁰ Ω/□, a total light transmittance of 87 % and a haze value of 5 %.

### COMPARATIVE EXAMPLE 2

A dispersion with a 10 wt.% filler concentration was prepared in the same manner as in Comparative Example 1. This dispersion was loaded in a solvent-containing liquid acrylic resin so that the filler content reached 90 % by weight of total solids. After thourough mixing, the mixture was coated on a PET film using a bar coater, dried and cured by heat to provide a coating film with a dry thickness of 2 µm.

This coating film exhibited a surface resistance of 8 x 104 Ω/□, a total light transmittance of 54 % and a haze value of 23 %.

### UTILITY IN INDUSTRY

The electroconductive materials I and II comprising a finely-divided, flaky or platy indium zinc oxide based hexagonal layered compound exhibit superior electrical conductivity and highly-effective resin reinforcement. Their presence does not adversely affect surface smoothness and optical properties. Accordingly, they are suitable for use as an antistatic agent, electrostatic control agent, electroconductive agent, transparent electrode for display devices and the like, and are useful as fillers for resins, coatings, inks and pastes.

In accordance with the manufacturing method of the present invention, the aforementioned electroconductive materials I and II of the present invention can be manufactured in an effective manner to reduce energy consumption.

## Claims

1. An indium zinc oxide based hexagonal layered compound **characterized** as being represented by the general formula (ZnO)ₘ·In₂O₃ (m = 2 - 20) and having a mean thickness of 0.001 - 0.3 µm and a mean aspect ratio (mean major diameter/mean thickness) of 3 - 1,000.

2. The indium zinc oxide based hexagonal layered compound **characterized** as being derived via substitution of at least one element selected from the group consisting of Sn, Y, Ho, Pb, Bi, Li, Al, Ga, Sb, Si, Cd, Mg, Co, Ni, Zr, Hf, Sc, Yb, Lu, Fe, Nb, Ta, W, Te, Au, Pt and Ge for a part of In or Zn in the hexagonal layered compound represented by the general formula (ZnO)ₘ·In₂O₃ (m = 2 - 20), and having a mean thickness of 0.001 - 0.3 µm and a mean aspect ratio (mean major diameter/mean thickness) of 3 - 1,000.

3. The indium zinc oxide based hexagonal layered compound as recited in claim 1 or 2, **characterized** as having a mean thickness of 0.001 - 0.1 µm and a mean aspect ratio of 3 - 1,000.

4. A method for manufactuing an indium zinc oxide based hexagonal layered compound, **characterized** as comprising, in sequence, providing a mixture containing a zinc compound, an indium compound, organic acid, and nitric acid optionally added thereto if neither of the zinc compound and indium compound is a nitrate compound, heating the mixture to thereby thicken it to a viscous liquid, and successively heating the liquid to a temperature of 250 - 350 °C to thereby cause a self-combustion reaction that results in the manufacture of the hexagonal layered compound as recited in claim 1.

5. A method for manufacturing an indium zinc oxide based hexagonal layered compound, **characterized** as comprising, in sequence, providing a mixture containing a zinc compound, an indium compound, a compound containing a substituting element, organic acid, and nitric acid optionally added thereto if neither of the zinc compound, indium compound and substituting element containing compound is a nitrate compound, heating the mixture to thereby thicken it to a viscous liquid, and successively heating the liquid to a temperature of 250 - 350 °C to thereby cause a self-combustion reaction that results in the manufacture of the hexagonal layered compound as recited in claim 2.

6. A transparent electroconductive composition **characterized** as containing the indium zinc oxide based hexagonal layered compound either recited in any one of claims 1 - 3 or manufactured by the method as recited in claim 4 or 5, and a transparent binder.
